Europäisches Patentamt

European Patent Office

Office européen des brevets

(11) Publication number: **0 517 110 A1**

# EUROPEAN PATENT APPLICATION

(21) Application number: **92109065.0**

(22) Date of filing: **29.05.92**

(51) Int. Cl.5: **B65B 35/44**, B65G 47/64

(30) Priority: **03.06.91 IT BO910193**

(43) Date of publication of application:
**09.12.92 Bulletin 92/50**

(84) Designated Contracting States:
**CH DE FR GB LI NL**

(71) Applicant: **MOPA S.r.L.**
**Via Bela Bartok 8**
**I-44100 Ferrara(IT)**

(72) Inventor: **Möller, Kurt**
**Via Bela Bartok 8**
**I-44100 Ferrara(IT)**

(74) Representative: **Modiano, Guido et al**
**c/o Modiano & Associati S.r.l. Via Meravigli,**
**16**
**I-20123 Milano(IT)**

(54) **Unit for rapidly distributing products on a plurality of levels for feeding packaging machines.**

(57) Unit for rapidly distributing products on a plurality of levels for feeding packaging machines, being provided with a conveyor belt (7) the inlet whereof being articulated about a transverse horizontal axis to a fixed frame (2) and the outlet thereof being oscillatable, said unit comprising a first motor (27), a second motor (28) and a third motor (29) having respective brake-and-clutch assemblies (31,32,33) for actuating respective first, second and third connecting rod-and-crank assemblies (34,35,36,37,38,39) adapted for stopping with the cranks (34,35,36) in two diametrically opposite positions in the direction of a rail (23) being longitudinally rigidly associated with the fixed frame (2) and along which a first slider (25) and a second slider (26) are slidingly mounted; said first motor (27) and said second motor (28) are fixed to the first and second sliders (25,26), whereas said third motor (29) is rigidly associated with the fixed frame (2); said third connecting rod (39) being articulated to said second slider (26), said second connecting rod (38) being articulated to said first slider (25) and the first connecting rod (37) being associated with the outlet of the conveyor belt (7); the simultaneous actuation of the motors (27,28,29) producing the oscillation of the conveyor belt (7) at one of four different levels (a,b,c,d) for unloading the products (P) onto four packaging lines.

FIG.1

EP 0 517 110 A1

The present invention relates to a unit for rapidly distributing products on a plurality of levels for feeding packaging machines.

Units for rapidly distributing products, such as chocolate bars, confectionery products or the like, on two stacked levels of products are known which are constituted by a conveyor belt whose inlet is at a constant height and whose outlet can be raised or lowered in order to move it at the inlets of two stacked conveyance lines which feed respective packaging machines.

It is known to raise and lower the outlets of the conveyor belt by means of a connecting rod-and-crank assembly actuated by a motor by means of a brake-and-clutch assembly.

In practice, the rotation of a shaft through 180° is converted into the rise or lowering of the outlet of the conveyor belt by a certain vertical distance.

In order to distribute products on more than two levels, for example four, it would be possible to adopt an apparatus of the above described type, stopping the crank in four different angular positions; however, such a device could not achieve high operating speeds, since the different angular motions of the crank entail different operation times and it would therefore be necessary to adapt the operating speed of the machine to the time required by the largest rotation of the crank, i.e. to the longest time.

On the other hand, the connecting rod-and-crank system has proved to be the most rapid and reliable for movements on two levels.

The technical aim of the present invention is to provide a unit for rapidly distributing products on a plurality of levels for feeding packaging machines which is capable of operating reliably and rapidly on more than two different levels.

Within the scope of this technical aim, an object of the present invention is to provide a unit with a simple structure which is relatively easy to execute in practice, is safe in use and effective in operation as well as relatively modest in cost.

This aim and this object, and others which will become more evident hereinafter, are achieved by the present unit as defined in the appended claims.

Further features will become apparent from the detailed description of a preferred but not exclusive embodiment of a distribution unit according to the invention, illustrated only by way of non-limitative example in the accompanying drawings, wherein:

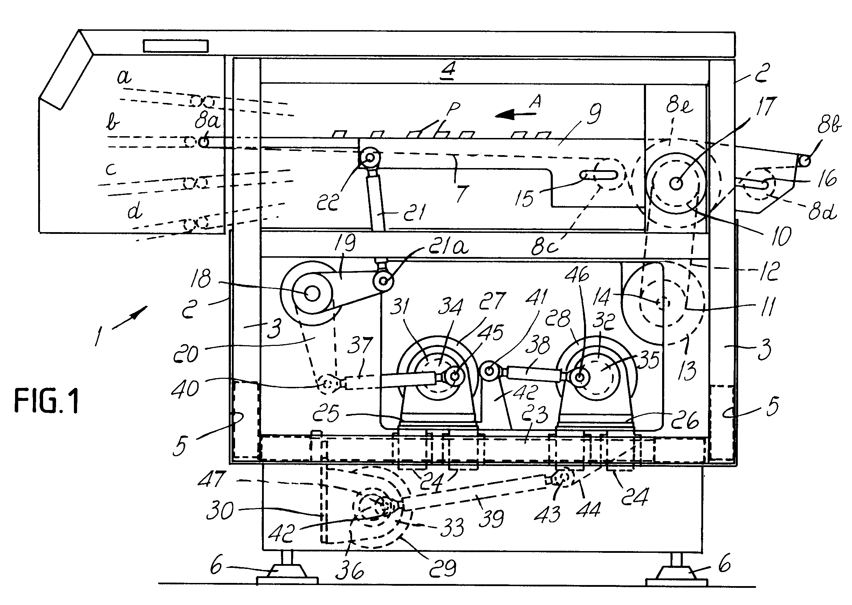

figure 1 is a schematic side view of a rapid product distribution unit according to the invention;

figure 2 is a schematic reduced-scale side view of the distribution unit of figure 1 in four different operating steps.

With particular reference to the above figures, the reference numeral 1 generally designates the unit for rapidly distributing products P, which advance in the direction of the arrow A, on a plurality of levels for feeding packaging machines whose conveyor belt inlets have been designated by a, b, c and d.

The distribution unit 1 comprises a fixed frame 2 which is constituted by a plurality of uprights 3, longitudinal members 4 and cross-members 5 which are welded to each other at right angles and which rest on the ground with adjustable feet 6.

A conveyor belt 7 is arranged in the upper part of the frame 2 and winds around rollers 8a, 8b, 8c, 8d and 8e which are mounted on a longitudinal framework 9; the roller 8e is actuated by means of two sprockets 10 and 11 and a chain 12 of which the sprocket 11 is connected to the output shaft 14 of a gearmotor 13 fixed to the frame 2.

The respective shafts of the rollers 8c and 8d can be positioned along respective pairs of slots 15 and 16 of the frame to apply tension to the belt; the shaft 17 of the roller 8e and of the sprocket 10 extends to the sides of the framework and is articulated, with the interposition of bearings, to the two sides of the frame 2 so as to allow the oscillation of the roller 8a at the levels of the inlets of the belts a, b, c, and d.

A transverse shaft 18 is rotatably mounted in the low part of the frame 2, and two arms 19 and 20 being mutually rigidly associated to define an L-shaped configuration are keyed thereon; the end of the arm 19 is articulated, by means of the pivot 21a, to a connecting rod 21 whose other end is articulated to the framework 9 by means of the pivot 22.

A longitudinal rail 23 is fixed to the base of the frame 2, which rail can be single or arranged alongside a second parallel rail; a single rail is described hereinafter, but what is described can be achieved with two side-by-side rails.

A first slider 25 and a second slider 26 are slidingly mounted along the rail 23 by means of ball or roller sleeves 24; a first motor 27 is fastened on the first slider, a second motor 28 is fastened on the second slider and a third motor 29 is fastened by a bracket 30 to the fixed frame 2 below the rail 23.

The motors 27, 28 and 29 are provided with related brake-and-clutch assemblies 31, 32 and 33 and with related eccentric cranks 34, 35 and 36 having crank pins 45,46,47 to which the respective ends of a first connecting rod 37, of a second connecting rod 38 and of a third connecting rod 39 are pivoted.

The other end of the connecting rod 37 is articulated to a pivot 40 of the free end of the arm 20; the other end of the second connecting rod 38 is articulated, by means of a pivot 41, to an upper wing 42 of the first slider 25; the other end of the third connecting rod 39 is articulated, by means of a pivot 43, to a lower wing 44 of the second slider 26.

The brake-and-clutch assemblies 31, 32 and 33 of the motors 27, 28 and 29 can be actuated independently of one another so as to stop the crank pins 45, 46 and 47 in two diametrically opposite positions (in the direction of the rail 23).

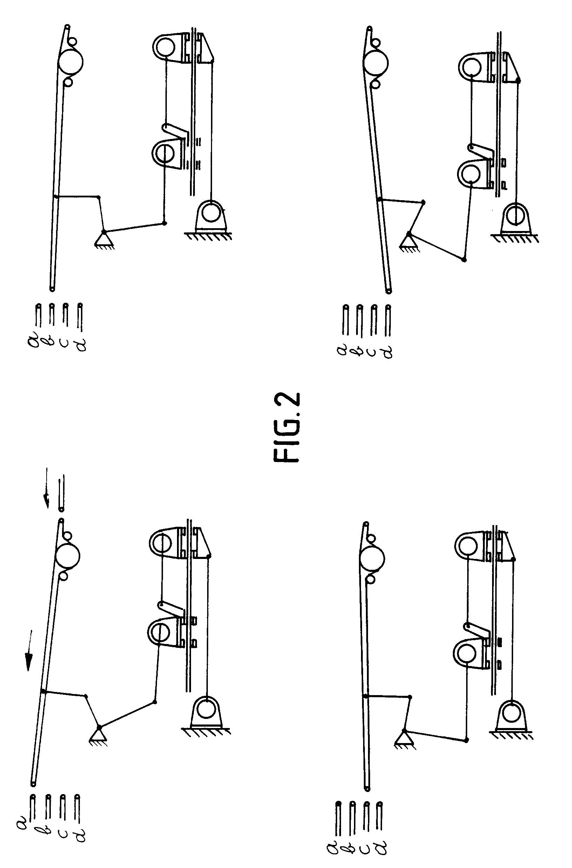

Figure 2 schematically illustrates the four levels to which the roller 8a moves depending on the positions in which the crank pins 45, 46 and 47 are stopped; it is to be noted that the assemblies 31, 32 and 33 are selectively actuated simultaneously, and therefore the oscillations of different extents required to move the roller 8a to the various levels a, b, c, and d are obtained by means of sums of simultaneous movements of crank pins 45, 46 and 47 by extents which have the same length and which can therefore be performed in the same time.

In this regard, the times required to vary the level of the outlet of the conveyor belt 7 are the same, whatever the initial level and whatever the level to be reached.

It has thus been seen that the invention achieves the intended aim and object.

The invention thus conceived is susceptible to numerous modifications and variations, all of which are within the scope of the inventive concept.

All the details may furthermore be replaced with other technically equivalent ones.

In practice, the materials employed, as well as the shapes and dimensions, may be any according to the requirements without thereby abandoning the scope of the protection of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Unit for rapidly distributing products on a plurality of levels (a,b,c,d) for feeding packaging machines, being provided with a conveyor belt (7) the inlet whereof being articulated about a transverse horizontal axis to a fixed frame (2) and the outlet thereof being oscillatable, said unit comprising a first motor (27), a second motor (28) and a third motor (29) having respective brake-and-clutch assemblies (31,32,33) which actuate respective first (34,37), second (35,38) and third (36,39) connecting rod-and-crank assemblies adapted for stopping with the cranks (34,35,36) in two diametrically opposite positions in the direction of a rail (23) being longitudinally rigidly associated with said fixed frame (2) and along which a first slider (25) and a second slider (26) are slidingly mounted, said first motor (27) and said second motor (28) being fastened to said sliders (25,26), said third motor (29) being instead rigidly associated with the fixed frame (2), said third connecting rod (39) being articulated to said second slider (26), said second connecting rod (38) being articulated to said first slider (25) and said first connecting rod (37) being associated with the outlet of the conveyor belt (7), the simultaneous actuation of said motors (27,28,29) producing the oscillation of the conveyor belt (7) at one of four different levels (a,b,c,d) for unloading the products (P) onto four packaging lines.

2. Distribution unit according to claim 1, characterized in that said first connecting rod (37) is associated with the conveyor belt (7) by means of two arms (19,20) which are mutually rigidly associated to form an L-shaped configuration being articulated to the frame (2) at the apex thereof, and, at the ends, respectively to said conveyor belt (7) and to said first connecting rod (37).

FIG.1

4

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | HYDRAULICS AND PNEUMATICS. vol. 35, no. 11, 1982, CLEVELAND US pages 96 - 98; 'STACKED PNEUMATIC CYLINDERS AUTOMATE CONVEYER BELT OPERATIONS' * the whole document * | 1 | B65B35/44 B65G47/64 |
| A | US-A-3 038 585 (BECKLEY) * column 2, line 21 - column 3, line 12 * * figures 1A,1B * | 1 | |
| A | EP-A-0 057 806 (SAPAL) * figures 2A-2C * | 1 | |

TECHNICAL FIELDS SEARCHED (Int. Cl.5 )

B65B
B65D
B65G

The present search report has been drawn up for all claims

| Place of search | Date of completion of the search | Examiner |
|---|---|---|
| THE HAGUE | 24 AUGUST 1992 | CLAEYS H.C.M. |